# FASCICULE DE BREVET EUROPEEN

(11) **EP 0 645 604 B1**
(45) Date de publication et mention de la délivrance du brevet: **25.11.1998**
(21) Numéro de dépôt: 94402129.4
(22) Date de dépôt: 23.09.1994
(51) Int. Cl.: G06F 3/023, G01C 21/20

(54) **Dispositif d'édition d'informations pour calculateur notamment d'aide à la navigation de véhicule automobile**
Vorrichtung zur Informationsaufbereitung für ein Autonavigationsystem
Device for editing information for a car navigation system

(30) Priorité: 24.09.1993 FR 9311417
(43) Date de publication de la demande: 29.03.1995
(73) Titulaire: AUTOMOBILES PEUGEOT, 75116 Paris (FR); AUTOMOBILES CITROEN, 92200 Neuilly-sur-Seine (FR)
(72) Inventeur: Rostan, Hervé, F78500 Sartrouville (FR)
(74) Mandataire: Habasque, Etienne Joel Jean-François

(56) Documents cités:
- EP-A- 0 559 355
- WO-A-91/20072
- GB-A- 1 582 941
- GB-A- 2 219 422
- US-A- 5 059 965
- US-A- 5 179 648

## Description

La présente invention concerne un dispositif d'édition d'informations pour calculateur notamment d'aide à la navigation de véhicule automobile.

La tendance croissante à l'introduction de moyens informatiques dans les postes de conduite des véhicules automobiles pose des problèmes différents de ceux couramment rencontrés dans les domaines informatiques classiques.

Ces problèmes sont d'ordre technique, mais également d'ordre ergonomique.

C'est ainsi que la gestion de moyens d'affichage d'informations par un calculateur doit trouver des solutions nouvelles, de même que les moyens de dialogue entre l'utilisateur et le calculateur doivent être adaptés à l'environnement automobile.

Certaines fonctions complexes, telles que la fonction d'édition d'informations, doivent être utilisées afin de guider l'utilisateur lorsque cela est possible et par conséquent, accélérer le traitement nécessaire à la sélection des informations à introduire dans ce calculateur.

Dans des domaines tels que l'informatique de bureau ou l'informatique industrielle, les utilisateurs se consacrent entièrement à ces tâches puisque ces moyens sont utilisés comme des outils de travail ou des substituts évolués de certaines fonctions.

La recherche d'efficacité ou de confort attendue de ces moyens autorise les choix les mieux adaptés d'implantation.

Cependant, alors que dans ces domaines où l'informatique vient utiliser ou simplifier des tâches existantes, les systèmes informatiques embarqués à bord des véhicules automobiles viennent se greffer à un environnement existant dans un espace limité et de surcroit s'ajoutent à une tâche de conduite du véhicule.

On comprend alors aisément la difficulté des choix ergonomiques aussi bien matériels que logiciels qu'un tel objectif entraîne.

Cette difficulté se retrouve également lors de la recherche de solutions techniques pour l'implantation physique d'organes tels que les dispositifs d'affichage et les moyens d'accès aux commandes associées à l'utilisateur.

Il est en effet relativement difficile d'implanter un clavier classique d'entrée d'informations dans un habitacle de véhicule automobile, pour des questions d'encombrement, mais aussi pour des questions de tenue mécanique. Cependant, dans des fonctions complexes telles que des fonctions d'aide à la navigation de véhicule, il est important de pouvoir spécifier au système informatique, des informations écrites telles que des noms de rues, de personnes, etc.. et il est donc nécessaire d'envisager des moyens d'édition d'informations appropriés au domaine automobile.

Les moyens d'entrée d'informations les plus communément répartis à savoir les claviers et les souris, ne sont pas adaptés à une implantation dans un véhicule automobile.

En effet, et ainsi qu'on l'a déjà mentionné précédemment, l'intégration d'un clavier nécessiterait de réduire sa taille pour des raisons d'encombrement, ce qui rendrait relativement difficile la lecture des symboles associés aux touches.

De plus, ces claviers sont relativement fragiles et sensibles aux vibrations.

L'utilisation d'une souris pose quant à elle des problèmes d'efficacité, dans la mesure où un tel moyen suppose la visibilité d'un pointeur sur le dispositif d'affichage, ce qui s'avère difficile sur des afficheurs de petites tailles.

Par ailleurs, cette souris est également sensible aux vibrations.

On conçoit alors que les différents dispositifs d'édition d'informations utilisés de manière classique pour introduire des informations dans un calculateur, ne sont pas adaptés à une utilisation dans un véhicule automobile.

On connaît également du document US-A-5 059 965, un dispositif pour la sélection ou l'entrée d'une destination dans un système de navigation de véhicule automobile.

Dans ce dispositif, on utilise deux basculeurs pour sélectionner les différents caractères.

On conçoit cependant que l'implantation d'un tel dispositif dans un véhicule est relativement complexe.

De plus, un tel dispositif est limité à l'entrée dans le système de navigation, de caractères destinés à entrer dans la constitution d'une chaîne de caractères et présente des capacités limitées.

Le but de l'invention est donc de résoudre ces problèmes.

A cet effet, l'invention a pour objet un dispositif d'édition d'informations pour calculateur notamment d'aide à la navigation de véhicule automobile, dans lequel le calculateur est relié à des moyens d'affichage d'informations et à des moyens d'entrée d'informations, les moyens d'entrée d'informations comportant des moyens de commande du défilement des informations dans une fenêtre des moyens d'affichage, actionnables par un utilisateur pour sélectionner une information et des moyens de saisie de cette information sélectionnée dans la fenêtre, par le calculateur, caractérisé en ce que les informations comprennent en outre des caractères destinés à entrer dans la constitution d'une chaîne de caractères et des symboles illustrant des fonctions du calculateur, et en ce que le calculateur est adapté pour, si l'information saisie est un caractère, permettre la saisie d'une autre information, pour constituer une chaîne de caractères, et, si l'information saisie est un symbole illustrant une fonction du calculateur, déterminer les opérations correspondantes à réaliser.

L'invention sera mieux comprise à l'aide de la description qui va suivre, donnée uniquement à titre d'exemple et faite en se référant aux dessins annexés, qui représentent un schéma synoptique illustrant la structure et le fonctionnement d'un dispositif d'édition d'informations selon l'invention.

Ainsi qu'on peut le voir sur cette figure, un dispositif d'édition d'informations selon l'invention peut être utilisé pour l'introduction d'informations dans un calculateur notamment d'aide à la navigation de véhicule automobile.

Ce calculateur est désigné par la référence générale 1, présente une structure classique et est relié à des moyens d'affichage d'informations constitués par exemple par un afficheur de type classique 2 et à des moyens d'entrée d'informations désignés par la référence générale 3 sur cette figure.

Selon l'invention, les moyens d'entrée d'informations comprennent des moyens 4 et 5 de commande du défilement dans un sens ou dans l'autre des informations dans une fenêtre 6 des moyens d'affichage, ces moyens de commande étant actionnables par un utilisateur pour sélectionner une information. Ces moyens d'entrée d'informations comprennent également des moyens de saisie de cette information sélectionnée dans la fenêtre, par le calculateur.

Ces moyens de saisie sont désignés par la référence générale 7 sur cette figure.

Les moyens 4,5 et 7 de commande du défilement des informations dans la fenêtre et de saisie des informations sélectionnées, par le calculateur, peuvent être constitués par exemple par des touches actionnables par l'utilisateur ou par tout autre moyen approprié comme par exemple une molette rotative ou un levier de commande.

On conçoit alors que la commande du défilement des informations dans la fenêtre des moyens d'affichage par l'utilisateur, qui se matérialise par un effet optique de glissement des informations dans la fenêtre, assure un retour visuel de la bonne prise en compte des actions de l'utilisateur lors de la manipulation des moyens de commande.

L'utilisateur contrôle alors ce défilement pour sélectionner une information et déclencher la saisie de cette information par le calculateur avant de procéder le cas échéant à la sélection d'une information suivante, la fenêtre se déplaçant par exemple à la manière d'un curseur sur les moyens d'affichage 2 pour permettre la sélection d'une chaîne d'informations.

Ce défilement peut être perçu par exemple comme une rotation d'un tambour de support d'informations ou comme un glissement d'une bande de support d'informations, à l'intérieur de la fenêtre des moyens d'affichage, que ceux-ci soit des moyens d'affichage en couleur ou monochrome et ce, quelle que soit leur taille.

Il va de soi qu'une ou plusieurs informations peuvent apparaître dans la fenêtre, tandis que les autres restent simplement suggérées à l'utilisateur.

Bien entendu les informations affichées peuvent être constituées par des lettres, des chiffres, ou encore des pictogrammes ou symboles illustrant des fonctions évoluées remplies par le calculateur telles que par exemple de correction des informations saisies, de contrôle/ commande d'organes fonctionnels du véhicule ou autres.

Les informations sélectionnées peuvent également apparaître en un emplacement des moyens d'affichage, différent de celui de la fenêtre.

On peut également envisager d'utiliser un autre organe d'affichage pour afficher les informations sélectionnées.

On notera également que l'édition d'informations grâce au dispositif tel qu'il vient d'être décrit peut être optimisée et accélérée dans le cas de la sélection d'une chaîne de caractères dans un ensemble de noms donné.

En effet, le calculateur peut être programmé pour n'autoriser l'arrêt sur une lettre ou un pictogramme que lorsque cela est effectivement possible, en fonction des informations déjà sélectionnées, c'est à dire par exemple lorsqu'il existe un nom dans l'ensemble de recherche qui correspond à la suite de caractères déjà affichés.

Ainsi par exemple dans le cas où l'on désire entrer un nom de rue dans le calculateur de navigation, il est inutile d'autoriser l'accès à toutes les lettres de l'alphabet si l'ensemble des premières lettres sélectionnées constitue par exemple une chaîne de caractéres telle que " REP " et que les seuls noms de voies présents dans la base de données, et compatibles avec cette sélection, sont les noms "REPOS" et "REPUBLIQUE".

Dans ce cas, le calculateur n'autorisera l'arrêt du défilement des informations que sur les lettres O et U ou sur des pictogrammes illustrant des fonctions évoluées, telles que les fonctions de corrections, d'affichage de liste, de sortie de l'éditeur ou de contrôle quelconque comme cela a déjà été évoqué précédemment.

Par ailleurs, le défilement des informations se présentant sous la forme d'un tambour ou d'un ruban, peut être envisagé selon deux modes de fonctionnement, à savoir en mode bouclé ou en mode butée.

En mode bouclé, quelle que soit la position du tambour ou du ruban, celui-ci répond à une sollicitation de déplacement de l'utilisateur par appui sur une touche ou une rotation de la molette par exemple, par un mouvement de défilement.

C'est à dire que l'ensemble des informations qu'il porte peut être vu comme une liste circulaire d'au moins trois éléments, sans tête ni queue, et que toute information visible dans la fenêtre peut être déplacée dans les deux sens.

Dans le cas particulier où l'on utilise un tambour ou un ruban contenant plusieurs éléments mais dont seulement un peut être validé (tambour sélectif), on peut très bien envisager, en cas de manipulation d'un désignateur, que le tambour fasse un tour complet pour ne présenter à nouveau que la seule information possible.

A titre d'exemple, on peut citer une liste circulaire affichant les vingt six lettres de l'alphabet. En fonction du sens de déplacement demandé, on peut passer de la première lettre de l'alphabet à la dernière sans blocage.

En mode butée, la liste d'informations présentée sur le tambour ou le ruban, est finie.

Elle dispose d'un premier élément et d'un dernier élément et lorsque l'un deux est atteint lors d'un déplacement, la demande de déplacement suivante dans le même sens n'est pas prise en compte.

Ce mode peut être utile dans le cas d'un tambour utilisé pour sélectionner un nom dans une liste de noms, par exemple de type répertoire.

En effet, la fenêtre pourrait proposer un icône de déplacement vers le bas, un icône de déplacement vers le haut, un icône de sortie et un icône d'aide.

En positionnant lesdits icônes de déplacement en début et en fin de liste, le fait de se positionner sur l'un d'eux, constituerait une butée et la demande de déplacement dans le même sens, donc non prise en compte pour le déplacement, pourrait par exemple faire office de validation de l'icône.

On conçoit alors que la structure et le fonctionnement du dispositif d'édition selon l'invention, permettent à l'utilisateur, grâce à des moyens très simples, d'introduire dans le calculateur les informations nécessaires et d'accéder à des fonctions évoluées de celui-ci, et ce de manière très rapide et fiable.

Ces fonctions peuvent par exemple être des fonctions d'aide à la navigation, auquel cas le dispositif permet d'introduire dans le calculateur, des informations initiales de calcul d'itinéraire ou des fonctions de contrôle/commande d'organes fonctionnels du véhicule, tels que par exemple, climatisation, auto-radio, radio-téléphone, etc.., auquel cas le dispositif permet d'introduire dans le calculateur des informations de pilotage de ceux-ci à partir desquelles le calculateur détermine les opérations de contrôle/commande correspondantes de l'organe.

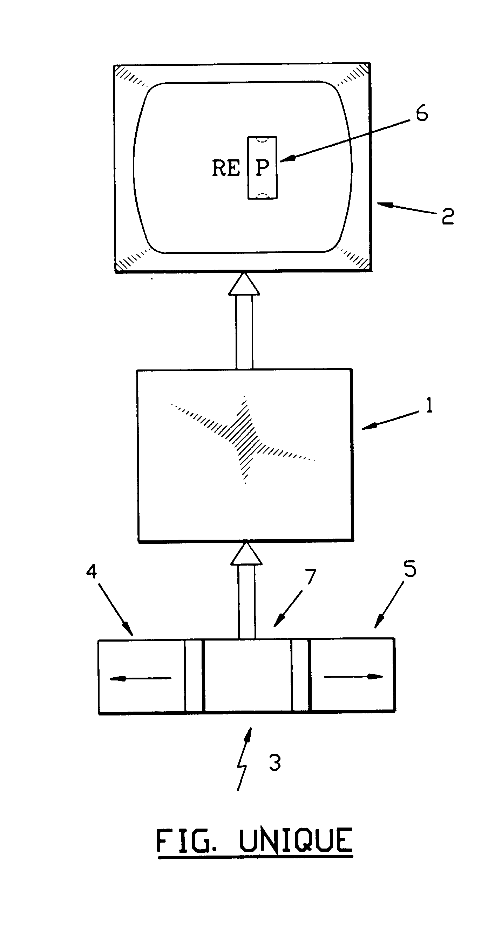

## Revendications

1. Dispositif d'édition d'informations pour calculateur notamment d'aide à la navigation de véhicule automobile, dans lequel le calculateur (1) est relié à des moyens (2) d'affichage d'informations et à des moyens (3) d'entrée d'informations, les moyens d'entrée d'informations comportant des moyens (4,5) de commande du défilement des informations dans une fenêtre (6) des moyens d'affichage (2), actionnables par un utilisateur pour sélectionner une information et des moyens (7) de saisie de cette information sélectionnée dans la fenêtre, par le calculateur (1), caractérisé en ce que les informations comprennent en outre des caractères destinés à entrer dans la constitution d'une chaîne de caractères et des symboles illustrant des fonctions du calculateur, et en ce que le calculateur (1) est adapté pour, si l'information saisie est un caractère, permettre la saisie d'une autre information dans la fenêtre pour constituer une chaîne de caractères, et, si l'information saisie est un symbole illustrant une fonction du calculateur, déterminer les opérations correspondantes à réaliser.

2. Dispositif selon la revendication 1, caractérisé en ce que les informations comprennent en outre un symbole illustrant une correction de caractère déjà saisi et en ce que le calculateur (1) est adapté pour, lors de la saisie de ce symbole, amener un caractère déjà saisi dans ladite fenêtre (6) et permettre sa modification.

3. Dispositif selon la revendication 1 ou 2, caractérisé en ce que les moyens de commande du défilement des informations et de saisie de ces informations comprennent des touches.

4. Dispositif selon la revendication 1 ou 2, caractérisé en ce que les moyens de commande du défilement des informations et de saisie de ces informations comprennent une molette rotative.

5. Dispositif selon la revendication 1 ou 2, caractérisé en ce que les moyens de commande du défilement des informations et de saisie de ces informations comprennent un levier de commande.

6. Dispositif selon l'une quelconque des revendications précédentes, caractérisé en ce que le calculateur est adapté pour limiter la sélection à des informations autorisées en fonction des informations déjà sélectionnées.

7. Dispositif selon l'une quelconque des revendications précédentes, caractérisé en ce que la fenêtre est déplaçable sur les moyens d'affichage (2) pour permettre la sélection d'une chaîne d'informations.

8. Dispositif selon l'une quelconque des revendications 1 à 6, caractérisé en ce que les informations sélectionnées s'affichent en un emplacement des moyens d'affichage, différent de celui de la fenêtre.

9. Dispositif selon l'une quelconque des revendications 1 à 6, caractérisé en ce qu'il comporte un autre organe d'affichage pour afficher les informations sélectionnées.

## Claims

1. Information editing device for a computer, in particular a motor vehicle navigation aid computer, wherein the computer (1) is connected to information display means (2) and to information input means (3), the information input means comprising means (4, 5) of controlling the scrolling of information in a window (6) of the display means (2), which can be actuated by a user to select a piece of information and means (7) of acquisition of this information selected in the window by the computer (1), characterised in that the information furthermore comprises characters intended to become part of the composition of a string of characters and symbols illustrating functions of the computer, and in that the computer (1) is adapted, if the acquired piece of information is a character, to allow the acquisition of another piece of information in the window in order to constitute a string of characters and, if the information acquired is a symbol illustrating a function of the computer, to determine the corresponding operations to be carried out.

2. Device according to Claim 1, characterised in that the information furthermore comprises a symbol illustrating a correction of a character already acquired and in that the computer (1) is adapted, during the acquisition of this symbol, to bring an already acquired symbol into the said window (6) and to allow its modification.

3. Device according to Claim 1 or 2, characterised in that the means of control of the scrolling of information and of acquisition of this information comprise keys.

4. Device according to Claim 1 or 2, characterised in that the means of control of the scrolling of information and of acquisition of this information comprise a rotary knurled wheel.

5. Device according to Claim 1 or 2, characterised in that the means of control of the scrolling of information and of acquisition of this information comprise a control lever.

6. Device according to any one of the preceding claims, characterised in that the computer is adapted to limit the selection to authorised information according to information already selected.

7. Device according to any one of the preceding claims, characterised in that the window is movable over the display means (2) in order to allow the selection of a string of pieces of information.

8. Device according to any one of Claims 1 to 6, characterised in that the selected information is displayed in a location of the display means which is different from that of the window.

9. Device according to any one of Claims 1 to 6, characterised in that it comprises another device for displaying the selected information.

## Patentansprüche

1. Vorrichtung zur Informationsaufbereitung für einen Rechner, insbesondere für die Unterstützung eines Autonavigationssystems, bei dem der Rechner (1) mit Mitteln (2) zur Anzeige von Informationen und mit Mitteln (3) für die Informationseingabe verbunden ist, bestehend aus Mitteln (4, 5) für die Steuerung des Informationsablaufs in einem Fenster (6) der Anzeigemittel (2), die durch einen Benutzer betätigbar sind, um eine Information auszuwählen, und aus Mitteln (7) für die Erfassung dieser in dem Fenster ausgewählten Information durch den Rechner (1), dadurch gekennzeichnet, daß die Informationen ferner Schriftzeichen, die dazu bestimmt sind, zu einer Kette von Schriftzeichen zu gehören, und Symbole, die Funktionen des Rechners anzeigen, umfassen, und daß der Rechner (1) derart ausgeführt ist, daß er, wenn eine erfaßte Information ein Schriftzeichen ist, die Erfassung einer weiteren Information in dem Fenster ermöglicht, um eine Kette von Schriftzeichen zu bilden, und wenn die erfaßte Information ein Symbol ist, das eine Funktion des Rechners darstellt, die entsprechenden durchzuführenden Operationen zu bestimmen.

2. Vorrichtung nach Anspruch 1, dadurch gekennzeichnet, daß die Informationen ferner ein Symbol umfassen, das eine Korrektur eines bereits erfaßten Schriftzeichens darstellt, und daß der Rechner (1) derart ausgeführt ist, daß er bei der Erfassung dieses Symbols ein bereits erfaßtes Schriftzeichen in das Fenster (6) bringt und seine Änderung ermöglicht.

3. Vorrichtung nach Anspruch 1 oder 2, dadurch gekennzeichnet, daß die Mittel zur Steuerung des Ablaufs der Informationen und zur Erfassung dieser Informationen Tasten umfassen.

4. Vorrichtung nach Anspruch 1 oder 2, dadurch gekennzeichnet, daß die Mittel zur Steuerung des Ablaufs der Informationen und zur Erfassung dieser Informationen ein drehbares Rad umfassen.

5. Vorrichtung nach Anspruch 1 oder 2, dadurch gekennzeichnet, daß die Mittel zur Steuerung des Ablaufs der Informationen und zur Erfassung dieser Informationen einen Steuerhebel umfassen.

6. Vorrichtung nach einem der vorhergehenden Ansprüche, dadurch gekennzeichnet, daß der Rechner derart ausgeführt ist, daß die Auswahl auf Informationen beschränkt wird, die in Abhängigkeit von den bereits ausgewählten Informationen genehmigt sind.

7. Vorrichtung nach einem der vorhergehenden Ansprüche, dadurch gekennzeichnet, daß das Fenster auf die Anzeigemittel (2) verschiebbar ist, um die Auswahl einer Informationskette zu ermöglichen.

8. Vorrichtung nach einem der Ansprüche 1 bis 6, dadurch gekennzeichnet, daß die ausgewählten Informationen an einer Stelle der Anzeigemittel angezeigt werden, die sich von jener des Fensters unterscheiden.

9. Vorrichtung nach einem der Ansprüche 1 bis 6, dadurch gekennzeichnet, daß sie ein weiteres Anzeigeelement umfaßt, um die ausgewählten Informationen anzuzeigen.
